(19) Europäisches Patentamt

European Patent Office

Office européen des brevets

(11) Publication number : **0 443 734 B1**

# (12) EUROPEAN PATENT SPECIFICATION

(45) Date of publication of patent specification :
**03.11.93 Bulletin 93/44**

(51) Int. Cl.⁵ : **B01J 20/06,** B01J 39/12,
G01N 30/48, B01J 20/32,
C01G 25/02

(21) Application number : **91300762.1**

(22) Date of filing : **31.01.91**

(54) Coated zirconium oxide fibers.

(30) Priority : **20.02.90 US 482300**

(43) Date of publication of application :
**28.08.91 Bulletin 91/35**

(45) Publication of the grant of the patent :
**03.11.93 Bulletin 93/44**

(84) Designated Contracting States :
**DE GB SE**

(56) References cited :
**EP-A- 0 328 256**
**EP-A- 0 331 283**
**EP-A- 0 375 158**
**FR-A- 2 644 449**

(73) Proprietor : **MINNESOTA MINING AND
MANUFACTURING COMPANY
3M Center, P.O. Box 33427
St. Paul, Minnesota 55133-3427 (US)**

(72) Inventor : **Funkenbusch, Eric F., c/o Minnesota
Mining and
Manufact. Co., 2501 Hudson Road, P.O. Box
33427
St. Paul, Minnesota 55133-3427 (US)**

(74) Representative : **Baillie, Iain Cameron et al
c/o Ladas & Parry, Altheimer Eck 2
D-80331 München (DE)**

## Description

Field of the Invention

This invention discloses coated zirconia fibers and a process for their preparation. The coated zirconia fibers are useful in chromatographic and immobilization applications.

Background of the Invention

Chromatographic separations are becoming increasingly important in today's high tech society. The use of porous, spherical $ZrO_2$ particles for various types of chromatographic stationary phases has been disclosed in U.S. Patents 3,782,075, 4,010,242, and 4,138,336.

Methods of improving the alkaline stability of particulate $SiO_2$ by cladding the surface with a more base stable metal oxide such as zirconium oxide ($ZrO_2$) have been disclosed in U.S. Patent Nos. 4,648,975 and 4,600,646. This cladding is disclosed to increase the upper pH limit at which these supports, also referred to as packings, can be used to 11 and 9.5, respectively. However, these packings still lack adequate stability to allow them to be sterilized and cleaned in, for example, 0.1 N aqueous sodium hydroxide (NaOH, pH=13).

Tubular reactors and chromatography columns having good axial flow characteristics at high packing densities have been made by packing tubes with bundles of continuous glass fibers that are in generally parallel alignment as disclosed in U.S. Patent Nos. 4,657,742 and 4,715,105. Use of cellulosic and organic fibers is suggested in U.S. Patent No. 4,657,742. Use of ceramic fibers is not suggested.

The majority of separations employing high pressure liquid chromatography (HPLC) are performed in the so-called reversed-phase mode. In this mode, the column-packing material is referred to as stationary phase. The most commonly used stationary phases feature a non-polar ligand (e.g., octane or octadecane) covalently-bound to a porous silica particle through a siloxane bond (Si-O-Si) to render the surface hydrophobic. Although these silica-based bonded phases are very useful for a wide range of applications in reversed-phase HPLC, their use is strictly limited to the pH range of between 2 and 8, due to the hydrolytic instability of both the silica support particle and the siloxane bond used to "anchor" the non-polar active group.

Ion-exchange chromatography (IEC) has become an important separation technique for the purification of biomolecules. Typical supports used in IEC are silica, alumina, agarose, polymethacrylate, and poly(styrene-divinylbenzene). See H. G. Barth et al., Anal. Chem., 60, 387R (1988). Agarose is not suitable for high pressure work, while silica and alumina have limited pH stability. The matrices of silica and alumina must also be derivatized or coated to provide the support with ion exchange properties. This often introduces hydrophobic interactions into the retention mechanism. The hydrophobic nature of hydrocarbon-based supports such as poly(styrene-divinylbenzene) must be masked in order for them to be used as IEC supports. The hydrocarbon-based supports are also subject to shrinking and swelling whereas inorganic supports are not.

Zirconium phosphate has been extensively studied as an inorganic ion exchanger for the nuclear industry because of its excellent exchange capacities, radiation and thermal stability. See A. Clearfield et al., Ion Exchange and Solvent Extraction, J. A. Marinsky et al., eds., Marcel Decker, New York, (1973) at Chapter 1. However, relatively little work has been done using zirconium phosphate as an HPLC support because of its poor mechanical properties and the lack of materials with the necessary porous structure. Furthermore, zirconium phosphate lacks the mechanical stability necessary for high performance chromatographic supports.

EP-A-0375158 discloses a continuous ceramic fiber, comprising at least 50 mole percent crystalline zirconia grains, said grains have at size of at most 1.0μm, said fiber having a diameter in the range 10 to 50μm and a tensile strength greater than 0.5GPa. This European patent application which corresponds to U.S. Patent No. 4,937,212 also discloses a process for the preparation of such fibers.

The fibers may be either continuous or discontinuous in form and may possess either high surface area (in the range of 1 to 200 m²/g), and having an average pore size in the range of 0.2 to 50 nm (20 to 500Å), preferably 10-30 nm (100-300Å)) or low surface are (less than 1 m²/g) depending on the processing conditions employed. The process for their preparation involves incorporation of crystalline colloidal $ZrO_2$ particles into the fiber precursor also containing a soluble zirconium compound and a solvent. The presence of these colloidal particles allows strong, continuous fibers with larger diameters than previously achievable to be prepared.

Summary of the Invention

As used in the present application, "zirconia fibers" means fibers consisting of crystalline zirconia which may also contain other metal oxides as phase change stabilizers, grain growth inhibitors, or catalytic materials. By silicon-free is meant not containing silicon other than as an impurity at a level of less than about 2 weight percent.

Briefly, the present invention discloses fired $ZrO_2$ fibers coated in such a manner as to make them useful in reverse phase, ion exchange, and size exclusion chromatography applications. In these applications fibers with high surface areas are preferred.

According to the present invention there is provided a fired zirconia fiber comprising crystalline zirconia grains, said grains having a size of at most 1.0μm, said fiber having a diameter in the range of 10 to 60μm and a tensile strength greater than 0.5GPa, characterized in that said fiber has on its surface at least one of a coating and a surface modification selected from the group consisting of a layer of a crosslinked polymer, an immobilized protein, an inorganic phosphate and an organophosphorous compound.

## Detailed Description of Preferred Embodiments

The present invention provides, in a preferred embodiment, zirconia fibers and a method for preparing a ceramic fiber. The present invention also provides ceramic fibers which are coated with a continuous or discontinuous layer of a crosslinked hydrophobic or hydrophilic polymer. For enhanced utility in certain applications, the fiber can be modified with an effective amount of an inorganic phosphate or with an organophosphorus compound such as an organophosphonate or organophosphonic acid, prior to or following application of the hydrophobic polymer. Bioactive materials can be sorbed onto the exterior or interior surfaces of both the uncoated and polymer-coated fibers. Coated fibers of the invention, in continuous or discontinuous form, are useful in reverse phase, ion exchange, and size exclusion chromatography applications. In preferred embodiments, the ceramic zirconia fibers coated as just described with a hydrophobic polymer can be used to produce chromatography column support material, such as for use in high-performance liquid chromatography (HPLC), which resists dissolution and is therefore stable in aqueous media over a wide pH range. Zirconia fibers, when treated with a hydrophilic crosslinked polymer, can provide an ion-exchange support material. Coated fibers of the invention are stable in aqueous solutions of pH in the range of 1 to 14.

The coated $ZrO_2$ fibers of the present invention which are useful in chromatographic applications have coatings on, or modifications to, the fiber surface which impart the desired surface chemistry. Coated fibers have diameters in the range of 0.5 to 100 micrometers, preferably 5 to 80 micrometers, and more preferably 10 to 60 micrometers. Materials for and methods of coating $ZrO_2$ spherules so as to produce reverse phase, ion exchange, and size exclusion supports are disclosed in applicant's co-pending application U.S. Serial No. 07/151,819, filed 2/3/88 and in its CIP, U.S. Serial No. 07/420,150, filed 10/11/89. The coated fibers of the present invention are particularly useful in continuous form when employed as the packing material for an alligned fiber chromatography column.

The coated fibers are prepared by adsorbing a polymerizable monomer or oligomer onto the surface of the fibers as by, for example, solution infiltration processes such as dipping (preferably under vacuum), or any other coating means known in the art and subsequently cross-linking it, e.g., by reaction of the adsorbed material with a free radical initiator or by irradiation. The polymeric coating renders the $ZrO_2$ fibers hydrophobic without substantially altering any of their desirable physical and mechanical properties. Likewise, the $ZrO_2$ fibers can be coated with a hydrophilic, cross-linked polymer having exchangeable groups to form an ion-exchange support material. Coating thicknesses can be in a range greater than zero and up to 20 micrometers, preferably 0.0001 to 5.0 micrometers, more preferably 0.0001 to 0.1 micrometers. $ZrO_2$ fibers having surface areas in the range of 1 to 200 $m^2/g$ (highly porous) are preferred.

The coated fibers can also be combined with a suitable binder and used to coat a glass or plastic substrate to form plates for thin-layer chromatography.

In a preferred embodiment, the present invention is directed to a chromatographic support material comprising porous $ZrO_2$ fibers having a surface modification or a cross-linked polymeric coating thereon, wherein said coated fibers are hydrophobic, the modified or coated fibers having a pore size from 0.2 to 50 nm (20-500 Å) and an average diameter of 0.5-100 micrometers.

The $ZrO_2$ fibers of the present invention can also be employed to immobilize bioactive materials for a variety of purposes, including catalysts, analysis, affinity chromatography and synthetic transformations. Bioactive materials can be strongly sorbed onto the exterior and interior surfaces (pores) of uncoated, polymer-coated, and inorganic phosphate or organophosphorus compound surface-modified $ZrO_2$ fibers, while retaining a large percentage of their initial bioactivity. Representative biomaterials include proteins such as enzymes and antibodies.

In another embodiment, coated or uncoated $ZrO_2$ fibers can be prepared which comprise a biologically active material such as an enzyme or a protein such as an immunoglobulin. Upon depletion of the biological activity, the enzyme or other protein can be removed from the fibers by exposing them to an aqueous medium at high pH, e.g., by washing them with a solution of an alkali metal hydroxide. The fibers, stripped of the biological materials, can then be treated with a buffer to return them to a physiological pH, and subsequently reloaded with the same, or a different bioactive material.

The coated $ZrO_2$ fibers may also be exposed in situ to traditional sterilization conditions, for example, by exposing the packing or the packed column to heat and high pH, without significant degradation.

In yet another embodiment of the invention, the surface of the coated or uncoated $ZrO_2$ fibers is deactivated or modified by treatment with an effective amount of an inorganic phosphate, such as phosphoric acid or an alkali metal phosphate salt, or with an organophosphonate, prior to or following application of the hydrophobic polymer coating. The treatment conditions can be varied so as to either reversibly adsorb phosphate, which may be phosphate ion, onto the $ZrO_2$ surface, or to bind the phosphate onto and/or into the $ZrO_2$ surface, for example, as zirconium phosphate. These treatments render the fibers effective to separate negatively charged molecules such as sulfonates, carboxylates, and other oxyanions. It is also believed that the organophosphonate becomes incorporated into the organic matrix of the polymeric coating.

The majority of HPLC methodology employs the so-called "reverse phase" mode, i.e., the column-packing material (stationary phase) is non-polar and the eluent (mobile phase) is polar. Therefore, it is preferred to coat the surface of the $ZrO_2$ fibers with a hydrophobic coating, which is also preferably stable to aqueous solutions having a pH of 1-14. Hydrophilic polymer coatings can also be applied and cross-linked for modification of the $ZrO_2$ fibers to form an ion exchange support or a steric exclusion support. These hydrophilic polymer coatings are formed from monomers or oligomers which comprise polar groups such as sulfonic acids, carboxylic acids, amino groups, hydroxyl groups, amido groups or quaternary ammonium groups. A preferred method to prepare such a coating comprises sorbing a polymerizable monomer or oligomer onto the surface of the fibers, and cross-linking the monomer or oligomer. See G. Shomberg, LC-GC, 6, 36 (1988).

### Polymerizable Monomers or Oligomers

A wide variety of cross-linkable organic materials, which may be monomers, oligomers or polymers, can be employed to coat the porous $ZrO_2$ fibers. For example, such materials include polybutadienes, polystyrenes, polyacrylates, polyvinylpyrrolidones (PVP), polyvinyl alcohols (PVA), polyorganosiloxanes, polyethylenes, poly(t-butyl)styrenes, polyisoprenes, polyethyleneimines, polyaspartic acids and multifunctional silanes.

A preferred material for the preparation of a reversed phase support material is an oligomer of polybutadiene. A preferred material for modification of the $ZrO_2$ fibers to form a cation ion exchange support is polyaspartic acid. A preferred material for construction of a support suitable for aqueous steric exclusion chromatography is a tri- or di-alkoxy-,gamma-glycidoxy silane.

### Cross-linking Agents

Any of the common free radical sources including organic peroxides such as dicumyl peroxide, benzoyl peroxide or diazo compounds such as 2,2'-azobisisobutyronitrile (AIBN) may be employed as cross-linking agents for polymer coatings in the practice of the present invention. Useful commercially available peroxyesters include the alkylesters of peroxycarboxylic acids, the alkylesters of monoperoxydicarboxylic acids, the dialkylesters or diperoxydicarboxylic acids, the alkylesters of monoperoxycarbonic acids and the alkylene diesters of peroxycarboxylic acids. These peroxyesters include t-butyl peroctoate, t-butyl perbenzoate, t-butyl peroxyneodecanoate and t-butyl peroxymaleic acid. These compounds are commercially available from Pennwalt Chemicals, Buffalo, N.Y. The amount of any free radical initiator required to catalyze the polymerization reaction will vary depending upon the molecular weight of the initiator and its thermal stability. Oligomers may also be polymerized by thermal treatment, by irradiation with UV light or gamma rays or by exposure to high energy electrons.

A column "fouled" by repeated injections of large amounts of material, to the point that a marked change in characteristics is observed, can be stripped of "irreversibly adsorbed" material. The original column performance can be restored by pulsing the column with 100 µl injection of 1 M NaOH or by flushing the column for about 0.5-10 hrs with aqueous alkali metal hydroxide, i.e., with a 0.1 M NaOH solution.

### Bioactive Materials

A wide variety of bioactive materials can be bound to the uncoated or polymer-coated fibers by presently-available techniques so that their bioactivity is retained and prolonged, or "stabilized" with respect to the unbound bioactive material. For example, antibodies or enzymes can be bound to the uncoated fibers in high concentrations by agitating an aqueous mixture of degassed fibers and antibody in a buffer, e.g., for 0.1-5 hrs under ambient conditions. For a review of other noncovalent and covalent enzyme-binding methodologies, see R. A. Messing (U.S. Patent No. 3,850,751).

Enzymes capable of being bound and stabilized as described herein include a wide variety of enzymes which may be classified under six general groups: hydrolytic enzymes, redox enzymes, transferase enzymes, lyases, isomerases and ligases. The first group, hydrolase enzymes include proteolytic enzymes which hydrolyze proteins, e.g., papain, ficin, pepsin, trypsin, chymotrypsin, bromelin, keratinase, carbohydrases which hydrolyze carbohydrates, e.g., cellulase, glucuronidase, amylase, maltase, pectinase, chitinase; esterases which hydrolyze esters; e.g., lipase, cholinesterase, lecithinase, phosphatase; nucleases which hydrolyze nucleic acid, e.g., ribonuclease, deoxyribonuclease; and amidases which hydrolyze amines, e.g., arginase, asparaginase, glutaminase, and urease. The second group are redox enzymes tht catalyze oxidation or reduction reactions. These include glucose oxidase, catalase, peroxidase, lipoxidase, and cytochromes. The third group are transferase enzymes that transfer groups from one molecule to another. Examples of these are glutamic-pyruvic transaminase, glutamic-oxalacetic transaminase, transmethylase, phosphopyruvic transphosphorylase and dehydrogenase. The fourth group are lyase enzymes tht catalyze the cleavage of C-C, C-O, C-N and other bonds by elimination, leaving double bonds, or conversely, adding groups to double bonds. Examples of these are pyruvate decarboxylase, amino acid decarboxylases, aldolase, fumarate hydratases, aconitate hydratases and ammonia lyase. The fifth group are isomerase enzymes that catalyze the dehydrogenation and epimerization of amino acids and sugars. An example of an isomerase is phosphoglucomutase. The sixth group are ligase enzymes that catalyze the synthetic linking of two molecules, simultaneously with the breakdown of ATP. Examples of these are aminoacyl-tRNA synthetases and biotinyl-dependent carboxylases.

Other proteins capable of being bound and stablized as described herein include Concanavalin-A, Protein-A, acid glycoproteins, plasma immunoglobulins, monoclonal antibodies, bioactive polypeptides such as serum proteins and immunomodulators, e.g., lymphokines and the like. Other examples of proteins which are bound by the present fibers are provided in the working example hereinbelow.

## Phosphate Modification

The surface of uncoated or polymer-coated $ZrO_2$ fibers can be easily and dramatically modified in a chromatographically-beneficial way by treatment with aqueous inorganic phosphate solutions. The combination of polymer coating and phosphate treatment in either order produces a mixed mode stationary phase exhibiting both cation-exchange and reversed-phase properties. This allows one to adjust the selectivity of the present support material with respect to a group of basic solutes by appropriate adjustment of mobile phase pH, ionic strength, and reversed-phase eluting strength (i.e., volume fraction of the adjuvant organic solvent).

Useful aqueous inorganic phosphate solutions include 0.01-1.0 M solutions of phosphoric acid ($H_3PO_4$) or of alkali metal phosphate salts, e.g., orthophosphates, pyrophosphates, metaphosphates and tripolyphosphates.

Although phosphate ions can be adsorbed onto the $ZrO_2$ surface by exposure to dilute (0.01-0.5 M) aqueous solutions of various inorganic phosphates for relatively short periods of time (e.g., 1-3 hours) at ambient temperatures (20-30°C), the phosphate is slowly removed from the surface under conditions of high pH. Therefore, it is preferred to treat the surface of the $ZrO_2$ fibers with relatively concentrated (0.05-1.0 M) aqueous solutions of inorganic phosphates for longer periods of time (three or more hours) and/or at elevated temperatures (e.g., 90-110°C), so that the phosphate ions react with and become incorporated into an outer layer of the fiber, for example, as, e.g., zironium phosphate. Preferably, the treated fibers will comprise 0.5-15.0 wt-% phosphate.

This phosphate incorporated into the structure as zirconium phosphate is less readily removed by hydrolysis reactions than the surface adsorbed phosphate ions are by exchange processes. Both of these types of phosphate groups will nevertheless be gradually lost upon exposure to conditions of high pH (>10) in flowing mobile phases. This loss of phosphate can be reduced by keeping phosphate present in the mobile phase. Additionally, it is also possible to recondition a column which has lost phosphate by exposing it to phosphating conditions.

It is important to note that the underlying $ZrO_2$ fibers remain stable. It is therefore possible to perform an ion exchange separation with a column packed with phosphate-coated fibers, clean the column by flushing with strong base, and if necessary expose the column to phosphating conditions prior to the next separation operation. These cycles may be repeated indefinitely.

For purposes of calculating wt-% phosphate in the treated fibers, it will be assumed that each phosphate ion incorporated into the $ZrO_2$ fiber possesses four oxygen atoms. The weight percentage of phosphate can thus be calculated from a knowledge of the weight percentage of phosphorus in the fiber by the following formula: wt-% phosphate = wt-% phosphorous x $\frac{95 \text{ [molecular wt. } PO_4]}{31 \text{ [atomic wt. P]}}$ The weight percentage of phosphorus in the fibers can be measured by inductively coupled plasma spectroscopy (ICP). The amount of phosphorus incorporated in the fibers for a given exposure condition is directly related to the specific surface area of the $ZrO_2$ fiber.

For example, treatment of the $ZrO_2$ fibers having a specific surface area of about 117 $m^2/g$ for 1-4 hours at about 25°C with an excess of an aqueous solution of phosphoric acid with a concentration from about 0.01-1.0 molal yields fibers containing 2.0-5.0 wt-% phosphate. Treatment of $ZrO_2$ fibers for 1-4 hours at about 100°C with an excess of about 0.01-1.0 molal $H_3PO_4$ yields fibers containing 2.0-12.0 wt-% phosphate.

Although not intending to be bound by any particular theory of action, it is believed that these more rigorous treatment conditions, including temperatures of about 90-110°C, cause the phosphate ions to chemically react with and be incorporaed into the $ZrO_2$ fibers. Thus, the outer surfaces (both external and internal) of the fibers are at least partially converted to zironium phosphate. The thickness of this zirconium phosphate layer is governed by the reaction conditions employed. High phosphate concentrations, higher temperatures and longer reaction times lead to the formation of thicker layers. These fibers exhibit desirable cation exchange properties, while retaining the high mechanical and pH stability exhibited by untreated fibers. As discussed above, while less stable at elevated pHs and temperatures than the underlying $ZrO_2$ fibers, the phosphate coatings possess useful stabilities and can be readily regenerated by exposure to solution sources of inorganic phosphate.

Modification with Organophosphorus Compounds

For some applications, it is desirable to further deactivate or modify the surface of the uncoated or polymer-coated $ZrO_2$ fibers. This can be accomplished by treating the uncoated $ZrO_2$ fibers with an organophosphorus compound in a suitable solvent for the organophosphorus compound. Preferred organophosphorus compounds include the saturated or unsaturated organophosphonic acids and the water-soluble salts thereof, e.g. the alkali metal salts. Useful organophosphorus compounds include organophosphonates such as allylphosphonates, octyl phosphonates, diallyl phosphorates, allylphosphonic acid, phenyl phosphonic acid, naphthyl phosphonic acid, phenyl phosphinic acid, phenylphosphoric acid, and the salts thereof.

Useful solvents for the organophosphorus compound include aqueous alcohol, e.g., a solution of water and a $(C_1-C_5)$ alkanol. The $ZrO_2$ fibers are preferably coated by agitating the fibers in a solution of the organophosphorus compound so that the weight ratio of the organophosphorus compound to fibers is 0.25-1:1. The treated fibers are then separated from the treating solution, and dried. The cross-linked polymeric coating then can be applied as disclosed hereinabove.

Objects and advantages of this invention are further illustrated by the following examples, but the particular materials and amounts thereof recited in these examples, as well as other conditions and details, should not be construed to unduly limit this invention.

Testing Methods

The surface areas of the fibers were determined by the Brunauer-Emmett-Teller (BET) nitrogen adsorption technique using a Quantasorb™, Model SW-6 surface area measuring instrument (commercially available from Quantachrome Corp., Syosset, New York).

Tensile strength data were obtained by the application of load on a single filament. For most measurements a gauge length of 12.8 mm was used. For some measurements of weaker fibers a 6.4 mm gauge length was used. A uniform loading rate of 120 g per minute was used. To enable the calculation of tensile strength, filament diameters were measured directly using a micrometer.

Modulus of elasticity data were obtained on single fibers using a vibration resonance technique. A short (1 to 2 cm) length of fiber was glued onto a metal substrate attached to an accoustical driver so that it was cantilevered out from the substrate perpendicular to the direction of vibration. When the accoustical driver was oscillated, the fiber had several distinct and unique frequencies of resonance, the patterns of which were observed with a binocular microscope. The dynamic elastic modulus of the fiber was calculated according to the following equation:

$$E = 64\Pi^2 p (LF/dk)^2$$

where E = elastic modulus, L = fiber length, d = fiber diameter, F = resonant frequency, k = mode coefficient, and p = fiber density.

For calculation of elastic modulus, the fiber density was assumed to be 6.1 $g/cm^3$. The viscosities recited are Brookfield viscosities measured at ambient room temperature. In describing a fiber as "transparent", this term means that the fiber when viewed under an optical microscope, e.g., with a stereoscopic microscope at 50X and oblique or transmitted light, has the property of transmitting rays of visible light. Thus, bodies beneath and contiguous with the transparent fiber, such as fibers of the same nature, can be clearly seen therethrough, the outline, periphery or edges of contiguous bodies beneath being sharply discernible. "Opaque" fibers, on the other hand, as referred to herein are those which are impervious to visible light, i.e., contiguous bodies beneath are obscured by opaque fibers and cannot be seen therethrough. "Translucent" fibers are those whose ability to transmit light falls between transparent and opaque, and although translucent fibers have the property of transmitting visible light to some degree, and therefore are somewhat or partially transparent, contiguous bodies beneath can be seen in a diffuse manner rather than in a clearly distinguishable or sharp manner.

Sometimes, because of vagaries in firing, a fiber product may be a mixture of these various types of fibers (viz., transparent, opaque, translucent) though generally one type will be present in a predominant amount, indicative of the true nature of the mixture, the other types of products present in minor amounts having their particular appearance due to incomplete firing at the desired temperature or due to overheating because of hot spots in the furnace.

The practice of the present invention is illustrated by, but not limited to the following examples.

## Example 1

This example describes the preparation of highly porous, continuous, ZrO$_2$ fibers for coating in the subsequent examples. To 200 g of Nyacol Zr 100/20 colloidal zirconia sol (containing 20 wt-% ZrO$_2$) was added 3 g of concentrated nitric acid. To this was added 40 g of zirconyl acetate solution (containing 25 wt-% equivalent ZrO$_2$) with stirring. 33 g of PVP K-30 (50% aqueous solution) were then added with stirring. The mixture was filtered through a 0.3 micrometers AA Grade cartridge filter into a round bottom flask and concentrated on a rotary evaporated to a viscosity of approximately 100 PaSec. Fibers were extruded and drawn as described in Example 4. The fibers spun well and glossy, transparent, strong, continuous, green fibers were obtained. These green fibers were heated from room temperature to 600°C over 20 hours and then allowed to cool. The fired fibers were continuous and had diameters in the range of 10 to 15 micrometers and had a surface area of about 48 m$^2$/g. Protein can be immobilized on the surface of the fibers using the procedure of Example 12 of U.S.S.N. 07/420,150, filed 10/11/89.

## Example 2

This example describes the coating of a portion of the fibers prepared as described in Example 1 with a polymer, polybutadiene, so as to make their surfaces hydrophobic and therefore useful in reverse phase chromatography applications.

The polybutadiene used was obtained from Aldrich Chemical Corporation and had a stated molecular weight of 4,500 and its double bonds were 45% vinyl and 55% cis and trans - 1,4-polybutadiene. 0.05 g of this polybutadiene was dissolved in 100 ml of heptane in a 250 ml round bottom flask. .0012 g of dicumyl peroxide were added as a free radical initiator for the polymerization of the polybutadiene. 2.0 g of the fibers prepared as per Example 16 were added to the flask. The flask was then placed on a rotary evaporator and rotated under a vacuum of about 25 inches of Hg for 30 minutes. The vacuum was increased to 27 inches of Hg and the heptane was removed. The polybutadiene coated ZrO$_2$ fibers were dried in air and then cured at 190°C for 4 hours under vacuum to polymerize the polybutadiene. To remove any uncrosslinked polybutadiene which might be adsorbed to the fibers, the cured fibers were extracted for 4 hours with refluxing heptane in a Soxhlet extractor.

The surface area of the coated, cured, and extracted fibers was 28 m$^2$/g. The carbon, hydrogen, and nitrogen content of the fibers was determined by analysis to be consistent with the presence of a coating on the surface of a crosslinked layer of polybutadiene. The fibers had a tan color, and remained strong and continuous.

## Example 3

This example describes the reaction of the surface of a portion of the fibers prepared in Example 1 with phosphoric acid to prepare a fiber with phosphate incorporated in its surface. These fibers were useful in ion exchange chromatography applications.

1.18 g of concentrated phosphoric acid (85% H$_3$PO$_4$) was diluted with enough deionized water to produce a 1 wt-% solution. This solution was placed in a round bottom flask and 1.0 g of the fibers prepared as described in Example 16 was added. The flask was placed on a rotary evaporator and rotated under a vacuum of about 27 inches of Hg for about 30 minutes. The flask was then removed from the rotary evaporator. The flask was placed in a heating mantle and the solution was boiled for 30 minutes. The fibers were then removed from the flask, blotted dry with paper towels, and left to dry in air overnight.

The surface area of the phosphate treated fibers was 47 m$^2$/g. A portion of the fibers was dissolved in hydrofluoric acid and analyzed for phosphorous content by Inductively Coupled Plasma Spectroscopy. The fibers contained 2.9 wt-% phosphate consistent with the presence of phosphate ions incorporated in the surface of the fibers. The fibers remained strong and continuous.

## Claims

1. A fired zirconia fiber comprising crystalline zirconia grains, said grains having a size of at most 1.0μm, said fiber having a diameter in the range of 10 to 60μm and a tensile strength greater than 0.5GPa, characterized in that said fiber has on its surface at least one of a coating and a surface modification selected from the group consisting of a layer of a cross-linked polymer, an immobilized protein, an inorganic phosphate and an organophosphorous compound.

2. The fiber according to claim 1 wherein said fiber is porous and has pore sizes in the range of 20-500 Å.

3. The ZrO$_2$ fibers according to claims 1 and 2 wherein said layer of surface modification is an organophosphonic acid, or surface-adsorbed inorganic phosphate.

4. The fiber according to claims 1 to 3 which is a cation-exchange material.

5. The fiber according to claims 1 to 4 wherein said inorganic phosphate is derived from phosphoric acid or an alkali metal phosphate salt.

6. A thin layer chromatography plate comprising a substrate coated with a mixture of a binder and fiberous support material comprising fibers according to claims 1 to 5.

7. A bed comprising $ZrO_2$ fibers according to claims 1 to 6 having diameters in the range of 0.5 to 100 micrometers, 1-200 $m^2/g$ surface area and of 20-500 Å pore diameter.

8. The bed according to claim 7 which comprises an antibody or enzyme immobilized on said fibers.

## Patentansprüche

1. Gebrannte Zirconiumdioxid-Faser, umfassend kristalline Zirconiumdioxid-Körner, welche Körner eine Größe von höchstens 1,0 mm haben, welche Faser einen Durchmesser im Bereich von 10 bis 60 mm und eine Zugfestigkeit von mehr als 0,5 GPa hat,

dadurch gekennzeichnet, daß die Faser auf ihrer Oberfläche mindestens eine von einer Beschichtung und einer Oberflächenmodifikation aufweist, ausgewählt aus der Gruppe, bestehend aus einer Schicht eines vernetzten Polymers, einem immobilisierten Protein, einem anorganischen Phosphat und einer Organophosphorverbindung.

2. Faser nach Anspruch 1, welche Faser porös ist und Porengrößen im Bereich von 20 ... 500 Å aufweisen.

3. $ZrO_2$-Fasern nach Anspruch 1 und 2, bei der die Schicht der Oberflächenmodifikation eine Organophosphonsäure oder oberflächenadsorbiertes anorganisches Phosphat ist.

4. Faser nach Anspruch 1 bis 3, die ein Kationenaustauschmaterial ist.

5. Faser nach Anspruch 1 bis 4, bei der sich das anorganische Phosphat von Phosphorsäure oder einem Alkalimetallphosphatsalz ableitet.

6. Dünnschichtchromatographieplatte, umfassend ein Substrat, das mit einer Mischung aus einem Bindemittel und einem faserigen Trägermaterial aus Fasern nach Anspruch 1 bis 5 beschichtet ist.

7. Bett, umfassend Fasern nach Anspruch 1 bis 6 mit Durchmesserwerten im Bereich von 0,5 bis 100 Mikrometern, 1 bis 200 $m^2/g$ Oberfläche und 20 ... 5000 Å Porendurchmesser.

8. Bett nach Anspruch 7, das auf den Fasern einen Antikörper oder Enzym aufweist.

## Revendications

1. Fibre de zircone cuite comprenant des grains de zircone cristalline, la taille desdits grains n'excédant pas 1 micromètre, le diamètre de la fibre étant compris entre 10 et 60 micromètres et sa résistance à la traction étant supérieure à 0,5 GPa, caractérisée en ce que ladite fibre présente à sa surface au moins l'un d'un revêtement ou d'une modification de surface choisis dans le groupe constitué d'une couche de polymère réticulé, une protéine immobilisée, un phosphate non organique, et un composé organophosphoreux.

2. Fibre selon la revendication 1, dans laquelle la fibre est poreuse et les tailles des pores sont compris entre 20 et 500 Å.

3. Fibres de $ZrO_2$ selon les revendications 1 et 2, dans lesquelles ladite couche de modification de surface est un acide organophosphorique ou un phosphate non organique absorbé à la surface.

4. Fibre selon les revendications 1 à 3, faite d'une matière échangeuse de cations.

5. Fibre selon les revendications 1 à 4, dans lesquelles ledit phosphate non organique dérive d'un acide phosphorique ou d'un sel de phosphate d'un métal alcalin.

6. Plaque de chromatographie à couche fine comprenant un substrat revêtu d'un mélange de liant et d'une matière de support fibreuse comprenant les fibres selon les revendications 1 à 5.

7. Lit contenant des fibres $ZrO_2$ selon les revendications 1 à 6, dont les diamètres vont de 0,5 à 100 micromètres, la surface spécifique de 1 à 200 $m^2/g$ et le diamètre de pore de 20 à 500 Å.

8. Lit selon la revendication 7, comprenant un anticorps ou une enzyme immobilisée dans lesdites fibres.